# EUROPEAN PATENT SPECIFICATION

(11) **EP 2 469 968 B1**
(45) Date of publication and mention of the grant of the patent: **16.05.2018**
(21) Application number: 10809506.8
(22) Date of filing: 23.06.2010
(51) Int. Cl.: H04W 36/00, H04W 88/18

(54) **GSM SYSTEM BASED METHOD, APPARATUS AND SYSTEM FOR CELL HANDOVER**
GSM SYSTEM BASIERENDES VERFAHREN, VORRICHTUNG UND SYSTEM FÜR ZELLENÜBERGABE
PROCÉDÉ, DISPOSITIF ET SYSTÈME SUR LA BASE D'UN SYSTÈME GSM POUR TRANSFERT INTERCELLULAIRE DE CELLULE

(30) Priority: 19.08.2009 CN 200910167517
(43) Date of publication of application: 27.06.2012
(73) Proprietor: ZTE Corporation, Shenzhen, Guangdong 518057 (CN)
(72) Inventor: WANG, Xingguo, Guangdong 518057 (CN); LV, Hongtao, Guangdong 518057 (CN); HUA, Zhibin, Guangdong 518057 (CN); CHEN, Xiangliu, Guangdong 518057 (CN)
(74) Representative: Novagraaf Technologies
(86) International application number: PCT/CN2010/074338
(87) International publication number: WO 2011/020373

(56) References cited:
- WO-A2-01/58086
- CN-A- 1 376 372
- CN-A- 1 561 038
- CN-A- 1 921 478
- CN-A- 101 222 690
- CN-A- 101 222 690
- CN-A- 101 631 368
- "3rd Generation Partnership Project; Technical Specification Group GSM/EDGE Radio Access Network; Mobile Switching Centre - Base Station System (MSC-BSS) interface; Layer 3 specification (Release 8)", 3GPP STANDARD; 3GPP TS 48.008, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.7.0, 1 May 2009 (2009-05-01), pages 1-209, XP050379543,
- 'Technical Specification Group GSM/EDGE Radio Access Network; Mobile Switching Centre-Base Station System (MSC-BSS) interface; Layer 3 specification (Release 8)' 3GPP TS 48.008 V8.7.0, [Online] May 2009, XP008153824 Retrieved from the Internet: <URL:<URL:http://ftp.3gpp.org/specs/archive /48 series/48.008/>> [retrieved on 2010-08-16]

## Description

### Field of the Invention

The present invention relates to the communication field, and in particular to a Global System for Mobile Communication (GSM) system based method, apparatus and a system for cell handover.

### Background of the Invention

In the GSM mobile communication, the location of a mobile station held by a user is unfixed, while base stations at the network side are fixed, and in addition with the interference of the surroundings, the communication quality is very likely to worsen with the movement of the users. An effective rescue measurement is handover. The handover procedure ensures normal communication and can be further adapted to improving communication quality.

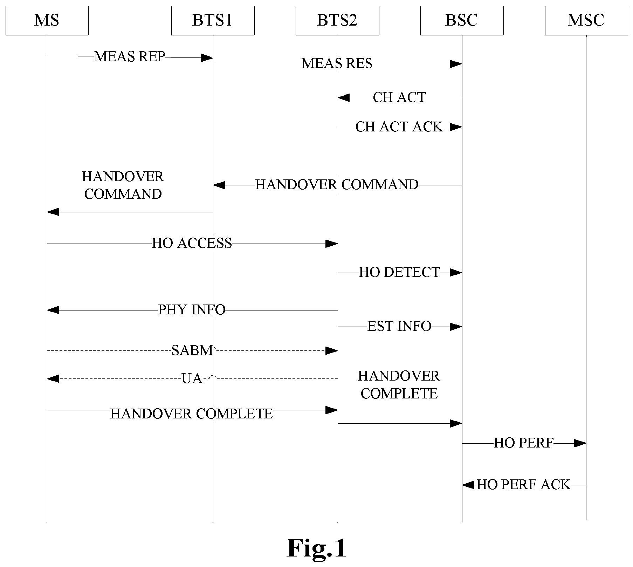

Fig. 1 is a flow chart of successful handover in a GSM system based method for cell handover according to the related art. In particular, this procedure is a flow chart of telephone service handover, which comprises the following steps.
1) A mobile station (MS) sends a measurement report message (MEAS REP) to a BTS1 (wherein BTS is base transceiver station).
2) The BTS1 sends a measurement result message (MEAS RES) to a BSC (base station controller).
3) The BSC returns a channel activation message (CH ACT) to a BST2.
4) The BST2 sends a channel activation acknowledgement message (CH ACT ACK) to the BSC.
5) The BSC sends a handover command message (HANDOVER COMMAND) to the BTS1.
6) The BTS1 sends the handover command message (HANDOVER COMMAND) to the MS.
7) The MS sends a handover access message (HO ACCESS) to a BTS2.
8) The BTS2 sends a handover detection message (HO DETECT) to the BSC.
9) The BTS2 sends a physical context (PHY INFO) to the MS.
10) The BTS2 sends a link establishment indication (EST INFO) to the BSC.
11) The MS sends a set asynchronous balanced mode message (SABM) to the BTS2.
12) The BTS2 sends a non-numeral response frame message (UA) to the MS.
13) The MS sends a handover complete message (HANDOVER COMPLETE) to the BTS2.
14) The BTS2 sends the handover complete message (HANDOVER COMPLETE) to the BSC.
15) The BSC sends a handover performed message (HO PERF) to the MSC (Mobile Switching Center).
16) The MSC returns a handover performed acknowledge message (HO PERF ACK) to the BSC.

In this GSM system, port A uses IP bearer, and a TC (Transcoder) is located at the MGW (Media Gateway), wherein the port A is a communication port between the BSC and the MSC. As shown in Fig. 1, the MS sends a HANDOVER COMPLETE message to the BSC to indicate that this handover is successful. Since different voice encoding modes are chosen before and after handover, after having received the HANDOVER COMPLETE message, the BSC sends a HANDOVER PERFORMED message (the reference "HO PERF" in the drawings) to the MSC to inform the MSC of the new voice encoding mode and the chosen channel type, and the MSC checks that the voice encoding mode has changed and informs the MGW to update the voice encoding mode.

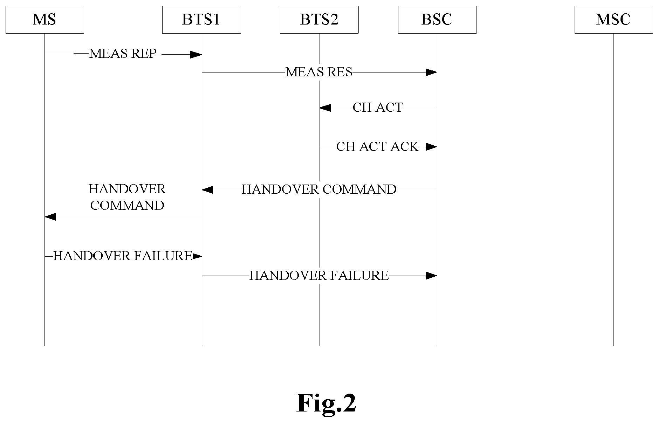

Fig. 2 is a flow chart of failed handover in a GSM system based method for cell handover according to the related art, which includes the following steps.
1) An MS sends a measurement report message (MEAS REP) to a BTS1.
2) The BTS1 sends a measurement result message (MEAS RES) to a BSC.
3) The BSC sends a channel activation message (CH ACT) to a BST2.
4) The BST2 sends a channel activation acknowledgement message (CH ACT ACK) to the BSC.
5) The BSC sends a handover command message (HANDOVER COMMAND) to the BTS1.
6) The BTS1 sends the handover command message (HANDOVER COMMAND) to the MS.
7) The MS sends a handover failure message (HANDOVER FAILURE) to the BTS1.
8) The BTS1 sends a handover failure message (HANDOVER FAILURE) to the BSC.

As shown in Fig. 2, the BSC determines, according to the measurement report, that it needs to initiate a handover and the handover type is intra-BSC handover, it sends a HANDOVER COMMAND message to the MS. The MS receives the handover command message and attempts to switch to a new channel. However, this handover is unsuccessful (here the BSC may have received a HANDOVER DETECT message). Then the MS sends a handover failure message over the channel before handover and returns to the channel before handover to keep connected.

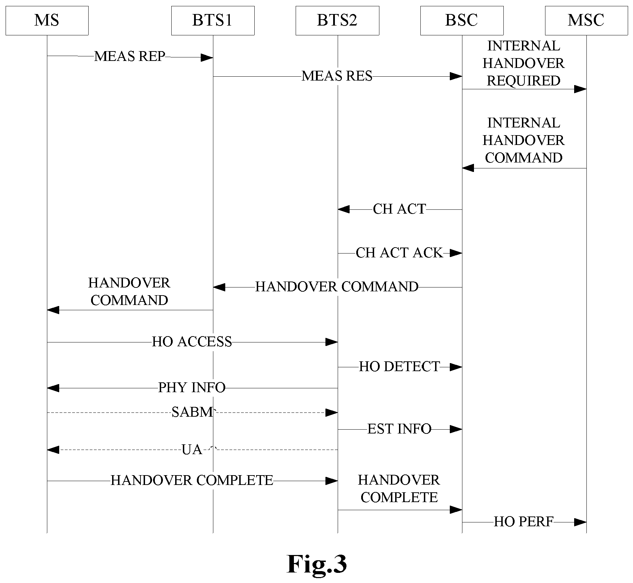

In addition, in a GSM system which uses IP bearer at port A, the protocol (3GPP TS 48.008 V8.7.0) also provisions that: if the BSC (Base Station Controller) detects that the mobile phone needs to initiate a BSS (Base Station Systems) internal handover, but the mobile phone cannot obtain the same voice encoding mode in the target cell or the voice encoding mode has to change, then at this moment the BSC needs to construct an INTERNAL HANDOVER REQUIRED message and sends this message to the MSC via an already existing BSSAP SCCP connection. This INTERNAL HANDOVER REQUIRED message carries the resources of this handover BSS request. The MSC receives the INTERNAL HANDOVER REQUIRED message and determines whether the required resource is available. If the required resource is unavailable, then the MSC returns an INTERNAL HANDOVER REQUIRED REJECT message to the BSS, and the BSC receives the INTERNAL HANDOVER REQUIRED REJECT message and this handover is ended. If the required resource is available, then the MSC sends an INTERNAL HANDOVER COMMAND message to the BSS. This INTERNAL HANDOVER COMMAND message carries effective information so as to facilitate the subsequent handover, and the particular processing procedure thereof is as shown in Fig. 3, which includes the following steps.
1) The MS sends a measurement report message (MEAS REP) to the BTS1.
2) The BTS1 sends a measurement result message (MEAS RES) to the BSC.
3) The BSC sends an INTERNAL HANDOVER REQUIRED message to the MSC.
4) The MSC returns an INTERNAL HANDOVER COMMAND message to the BSC.
5) The BSC sends a channel activation message (CH ACT) to a BST2.
6) The BST2 sends a channel activation acknowledgement message (CH ACT ACK) to the BSC.
7) The BSC sends a handover command message (HANDOVER COMMAND) to the BTS1.
8) The BTS1 sends the handover command message (HANDOVER COMMAND) to the MS.
9) The MS sends a handover access message (HO ACCESS) to the BTS2.
10) The BTS2 sends a handover detection message (HO DETECT) to the BSC.
11) The BTS2 sends a physical context (PHY INFO) to the MS.
12) The MS sends a set asynchronous balanced mode message (SABM) to the BTS2.
13) The BTS2 sends a link establishment indication (EST INFO) to the BSC.
14) The BTS2 sends a non-numeral response frame message (UA).
15) The MS sends a handover complete message (HANDOVER COMPLETE) to the BTS2.
16) The BTS2 sends the handover complete message (HANDOVER COMPLETE) to the BSC.
17) The BSC sends a handover performed message (HO PERF) to the BSC.

Likewise, in the handover method shown in Fig. 3, after having received a HANDOVER COMPLETE message from a mobile station MS, the BSC sends a HANDOVER PERFORMED message to the MSC to inform the MSC of the new voice encoding mode and the chosen channel type. And the MSC checks that the voice encoding mode has changed and updates the current voice encoding mode to the voice encoding mode after handover. Here, if the voice encoding mode is used on the MSC, then the MSC updates the current voice encoding mode used locally to the voice encoding mode after handover; and if the voice encoding mode is used on the MGW, then the MSC sends a message to inform the MGW to update the current voice encoding mode to the voice encoding mode after handover.

WO0158086 A2 relates to a packet-switched base station system transmission infrastructure and describes handover switching procedures in which a radio network server, RNS (equivalent to a BSC), sends a HANDOVER PERFORMED message to the MSC after having received a HANDOVER COMPLETE message from a mobile station.

However, as to the above two processing procedures, during handover, the first signaling received by the BSC after the mobile station MS accesses a new cell is the HANDOVER DETECT message (the reference "HO DETECT" in the drawings) sent from the BTS, and the BSC receives the HANDOVER COMPLETE message (the reference "HO COMPLETE" in the drawings) after about 200 ms, and then sends a HANDOVER PERFORMED message (the reference "HO PERF" in the drawings) to the MSC. At this moment, since there is a time period between the MS accessing a new cell and the MSC or MGW updating the voice encoding mode, if the voice encoding modes before and after handover are different, then this time period would cause the uplink data to be discarded on the MSC or MGW, and the downlink data to be discarded on the BSC, which makes the voice interrupted time to be rather long and reduces user experience.

As to the problem that the cell handover method in the related art causes the voice interrupted time to be rather long, still no effective solution is proposed till now.

### Summary of the Invention

Considering the problem in related art that the cell handover method causes the voice interrupted time to be rather long, the present invention is proposed. For this end, the present invention provides a GSM system based method, apparatus and a system for cell handover so as to solve at least one of the above problems. The present invention is defined in the appended independent claims.

A GSM system based method for cell handover is provided according to one aspect of the present invention, which comprises: after a base station controller (BSC) receives a handover detection message, the BSC determines whether a voice encoding mode after handover is the same as a voice encoding mode before the handover; if it is determined to be no, the BSC sends a first message to a mobile switching center MSC so that the MSC updates a current voice encoding mode to be a voice encoding mode after the handover, wherein the first message includes a channel type and the voice encoding mode after handover; and if the handover is successful, the BSC receives a handover complete message from a mobile station (MS).

A BSC is provided according to another aspect of the present invention, which comprises: a receiving module adapted to receive a handover detection message from a base transceiver station BTS and a handover complete message from a mobile station MS; a determination module adapted to determine whether a voice encoding mode before handover and a voice encoding mode after handover are the same after having received the handover detection message; and a sending module adapted to send a first message to the MSC after the receiving module receives the handover detection message, before the receiving module receives the handover complete message, and in the situation that the determination module determines that the voice encoding mode after handover is different from the voice encoding mode before handover, wherein the first message includes a channel type and the voice encoding mode after handover.

A MSC is provided according to another aspect of the present invention, which comprises: a receiving module adapted to receive a first message from the BSC after the BSC receives a handover detection message from a BTS, and before the BSC receives a handover complete message from an MS, and in the situation that BSC determines that a voice encoding mode after handover is different from a voice encoding mode before handover, wherein the first message includes a channel type and a voice encoding mode after handover; and an updating module adapted to update a current voice encoding mode to be the voice encoding mode after handover after the receiving module receives the first message, or send a message to inform a MGW to update the current voice encoding mode to be the voice encoding mode after handover after the receiving module receives the first message.

A GSM system based system for cell handover is provided according to another aspect of the present invention, which comprises a BSC and an MSC.

The above BSC comprises: a first receiving module adapted to receive a handover detection message from a BTS and a handover complete message from an MS; a determination module adapted to determine whether a voice encoding mode before handover and a voice encoding mode after handover are the same after the handover detection message is received; and a sending module adapted to send a first message to the MSC after the receiving module receives the handover detection message, and before the receiving module receives the handover complete message, and in the situation that the determination module determines that the voice encoding mode after handover is different from the voice encoding mode before handover, wherein the first message includes a channel type and the voice encoding mode after handover.

The above MSC comprises: a second receiving module adapted to receive the first message from the BSC; and an updating module adapted to update the current voice encoding mode to be the voice encoding mode after handover after the second receiving module receives the first message, or send a message to inform a MGW to update the current voice encoding mode to the voice encoding mode after handover after the second receiving module receives the first message.

According to the present invention, before receiving a HANDOVER COMPLETE (handover complete) message, the BSC sends a message to the MSC to inform the MSC of the voice encoding mode after handover and the chosen channel type, so that the MSC updates the current voice encoding mode to the voice encoding mode after handover. Thus the voice interrupted time during handover is reduced and user experience is improved.

### Brief Description of the Drawings

The drawings illustrated here provide a further understanding of the present invention and form a part of the present application. The exemplary embodiments and the description thereof are used to explain the present invention without unduly limiting the scope of the present invention. In the drawings:
Fig. 1 is a flow chart of successful handover in a GSM system based method for cell handover according to the related art;
Fig. 2 is a flow chart of failed handover in a GSM system based method for cell handover according to the related art;
Fig. 3 is a flow chart of a GSM system based method for cell handover according to the related art;
Fig. 4 is a flow chart of a GSM system based method for cell handover according to the present invention;
Fig. 5 is a flow chart of successful handover in a GSM system based method for cell handover according to the embodiments of the present invention;
Fig. 6 is a flow chart of failed handover in a GSM system based method for cell handover according to the embodiments of the present invention;
Fig. 7 is a structure diagram of a BSC according to the embodiments of the present invention;
Fig. 8 is a structure diagram of an MSC according to the embodiments of the present invention; and
Fig. 9 is a structure diagram of a GSM system based system for cell handover according to the present invention.

### Detailed Description of the Embodiments

The present invention will be described hereinafter in detail with reference to the drawings and in conjunction with embodiments. It needs to be noted that the embodiments of the present application and the features in the embodiments can be combined with each other if there is no conflict.

Considering the problem that the cell handover method in the related art causes the voice interrupted time to be rather long, the present invention provides a GSM system based method, apparatus and system for cell handover. In the cell handover method according to the present invention, before receiving a HANDOVER COMPLETE message, the BSC sends a message to the MSC to inform the MSC of the voice encoding mode after handover and the chosen channel type so that the MSC updates a current voice encoding mode to be the voice encoding mode after handover. Thus the voice interrupted time during handover is reduced and user experience is improved.

### Method embodiments

A GSM system based method for cell handover is provided according to the embodiments of the present invention.

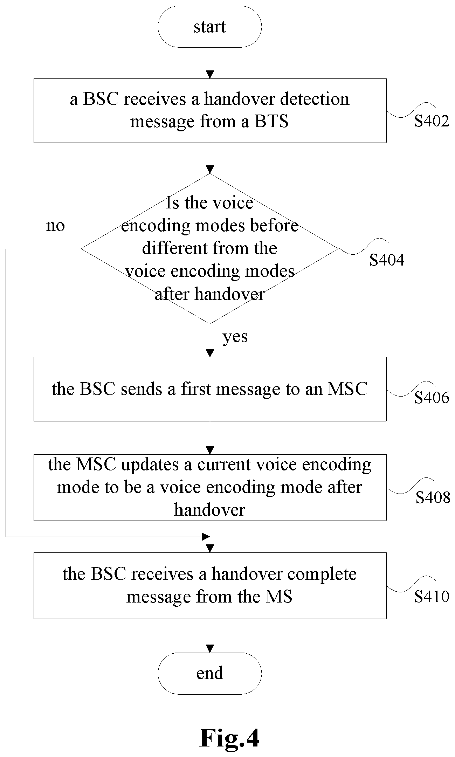

Fig. 4 is a flow chart of a GSM system based method for cell handover according to the present invention. As shown in Fig. 4, this method comprises the steps of S402 to S410.

Step S402: a BSC receives a handover detection message from a BTS.

After an MS accesses a new cell, the first signaling received by the BSC is a HANDOVER DETECT message sent from the BTS.

Step S404: the BSC determines whether a voice encoding mode after handover is the same as a voice encoding mode before the handover, and if it is determined to be no, step S406 is performed; otherwise, step S410 is performed.

After having received the handover detection message sent from the BTS, the BSC perform judgment on the voice encoding mode before handover and the voice encoding mode after handover. If the voice encoding mode before handover and the voice encoding mode after handover are different, the BSC informs the MSC of the voice encoding mode after handover.

Step S406: the BSC sends a first message to the MSC, wherein the first message includes a channel type and the voice encoding mode after handover.

The first message can be an INTRABSC HANDOVER DETECT message, and carries CHOSEN channel (channel type used after handover) and Speech Version (voice encoding mode after handover). If it is AMR (Adaptive Multi Rate), then the ACS (Active Codec Set) designated in the previous MSC assignment message is used.

Thus, before receiving a HANDOVER COMPLETE message, the BSC sends a message to the MSC to inform the MSC of the voice encoding mode after handover and the chosen channel type so that the MSC updates the current voice encoding mode to the voice encoding mode after handover Thus the voice interrupted time during handover is reduced and user experience is improved.

Step S408: after having received the first message from the BSC, the MSC updates the current voice encoding mode to be the voice encoding mode after handover.

Here, the MSC updating the current voice encoding mode to be the voice encoding mode after handover includes the two situations of: 1) if the voice encoding mode is used on the MSC, then the MSC updates the current voice encoding mode used locally to the voice encoding mode after handover; and 2) if the voice encoding mode is used on the MGW, then the MSC sends a message to inform the MGW to update the current voice encoding mode to the voice encoding mode after handover

Step S410: the BSC receives a HANDOVER COMPLETE message from the MS.

When the handover is completed, the BSC receives the HANDOVER COMPLETE message (this HANDOVER COMPLETE message can be initiated by the MS and forwarded by the BTS to the BSC) from the MS and sends a HANDOVER PERFORMED message to the MSC so as to inform the MSC that the handover is already completed. The contents carried by the HANDOVER PERFORMED message can refer to the protocol contents, as shown in Table 1. Then, the MSC returns a HANDOVER PERFORMED ACK message (the reference numeral in the figure is HO PERF ACK) so that the BSC knows that the MSC has already updated the current voice encoding mode to the voice encoding mode after handover according to the requirements of the BSC.

If this intra-BSS handover fails and it returns to the original channel, then the BSC receives a handover failure message from the MS and sends an INTRABSC HANDOVER FAIL message to the MSC. The INTRABSC HANDOVER FAIL message carries channel type and voice encoding mode before handover. After having received the INTRABSC HANDOVER FAIL message, the MSC updates the current voice encoding mode to be the voice encoding mode before handover. Here, the MSC updating the current voice encoding mode to the voice encoding mode after handover includes the two situations of: 1) if the voice encoding mode is used on the MSC, then the MSC updates the current voice encoding mode used locally to be the voice encoding mode before handover; and 2) if the voice encoding mode is used on the MGW, then the MSC sends a message to inform the MGW to update the current voice encoding mode to be the voice encoding mode before handover.

After the voice encoding mode is updated successfully, the MSC sends an INTRABSC HANDOVER FAIL ACK message to the BSC so that the BSC knows that the MSC has already updated the current voice encoding mode to the voice encoding mode before handover

The implementing process of the embodiments of the present invention will be described in detail in conjunction with examples hereinafter.

The solution provided by the present invention is related to BSC service software and core network service system.

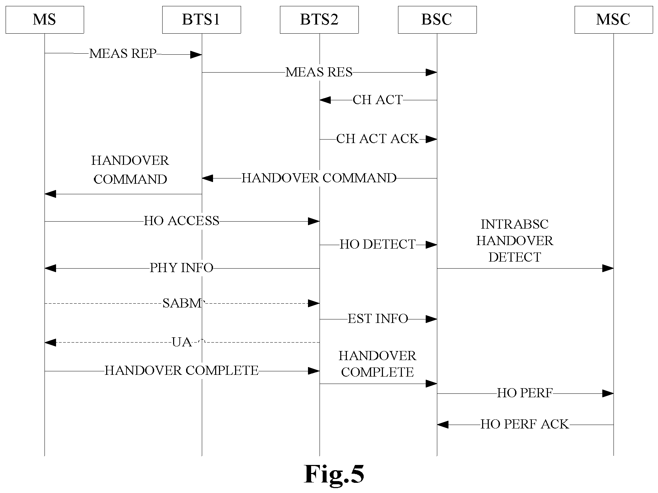

Fig. 5 is a flow chart of successful handover in a GSM system based method for cell handover according to the embodiments of the present invention, which includes the following steps.
1) The MS sends a measurement report message (MEAS REP) to the BTS1.
2) The BTS1 sends a measurement result message (MEAS RES) to the BSC.
3) The BSC sends a channel activation message (CH ACT) to a BST2;
4) The BTS2 sends a channel activation acknowledgement message (CH ACT ACK) to the BSC.
5) The BSC sends a handover command message (HANDOVER COMMAND) to the BTS1.
6) The BTS1 sends the handover command message (HANDOVER COMMAND) to the MS.
7) The MS sends a handover access message (HO ACCESS) to the BTS2.
8) The BTS2 sends a handover detection message (HO DETECT) to the BSC.
9) The BTS2 sends a physical context (PHY INFO) to the MS.
10) The BSC sends an INTRABSC HANDOVER DETECT to the MSC.
11) The MS sends a set asynchronous balanced mode message (SABM) to the BTS2.
12) The BTS2 sends a link establishment indication message (EST INFO) to the BSC.
13) The BTS2 sends a non-numeral response frame message (UA).
14) The MS sends a handover complete message (HANDOVER COMPLETE) to the BTS2.
15) The BTS2 sends the handover complete message (HANDOVER COMPLETE) to the BSC.
16) The BSC sends a handover performed message (HO PERF) to the MSC.
17) The MSC returns a handover performed acknowledge message (HO PERF ACK) to the BSC.

As shown in Fig. 5, as to the situation that the intra-BSS handover is successful, the particular processing procedure thereof includes the following steps.

Step S502: after having received a HANDOVER DETECT message sent from the Abis port (in which the Abis port is a communication port between the BSC and the BTS), the BSC system sends it to a CS control plane processing module to have it processed. The CS (Circuit Switch) control plane determines whether the voice encoding modes before and after handover are the same, if not, then it constructs an INTRABSC HANDOVER DETECT message (which carries CHOSEN channel (channel type used after handover) and Speech Version (voice encoding mode used after handover)) and sends this message to the MSC.

Step S504: after having received the INTRABSC HANDOVER DETECT message sent from port A, the MSC updates the current voice encoding mode to the voice encoding mode after handover Here, the MSC updating the current voice encoding mode to be the voice encoding mode after handover includes the two situations of: 1) if the voice encoding mode is used on the MSC, then the MSC updates the current voice encoding mode used locally to be the voice encoding mode after handover; and 2) if the voice encoding mode is used on the MGW, then the MSC sends a message to inform the MGW to update the current voice encoding mode to be the voice encoding mode after handover. After the updating, the MSC or MGW receives uplink voice data and sends downlink voice data according to the voice encoding mode after handover.

Thus, before the BSC receives the HANDOVER COMPLETE message, the MSC or MGW has already updated the current voice encoding mode to be the voice encoding mode after handover and receives uplink voice data and sends downlink voice data according to the voice encoding mode after handover. Thus the voice interrupted time during handover is reduced and user experience is improved.

Step S506: after the CS control plane of the BSC has received the HANDOVER COMPLETE message sent from the Abis port, the BSC sends a HANDOVER PERFORMED message to the MSC to inform the MSC that the handover has already completed. The contents carried by the HANDOVER PERFORMED message can refer to the protocol contents, as shown in Table 1. After having received the HANDOVER COMPLETE message, the MSC can delete the information that is adapted to indicating the voice encoding mode before handover. Here, the MSC deleting the information which is adapted to indicating the voice encoding mode before handover can include the two situations of: 1) if the voice encoding mode is used on the MSC, then the MSC deletes the local information which is adapted to indicating the voice encoding mode before handover; and 2) if the voice encoding mode is used on the MGW, then the MSC sends a message to inform the MGW to delete the information which is adapted to indicating the voice encoding mode before handover.

Then, the MSC returns a HANDOVER PERFORMED ACK message, so that the BSC knows that the MSC or MGW has already updated the current voice encoding mode to the voice encoding mode after handover according to the requirements of the BSC.

**Table 1**

| Information member | REFERENCE | Direction | Type | Length |
|---|---|---|---|---|
| Message type | 3.2.2.1 | BSS-MSC | M | 1 |
| Cause | 3.2.2.5 | BSS-MSC | M | 3-4 |
| Cell Identifier | 3.2.2.17 | BSS-MSC | M (note 5) | 3-10 |
| Chosen Channel | 3.2.2.33 | BSS-MSC | O (note 1) | 2 |
| Chosen Encryption Algorithm | 3.2.2.44 | BSS-MSC | O (note 2) | 2 |
| Speech Version (Chosen) | 3.2.2.51 | BSS-MSC | O (note 3) | 2 |
| LSA Identifier | 3.2.2.15 | BSS-MSC | O (note 4) | 5 |
| Talker Priority | 3.2.2.89 | BSS-MSC | O (note 6) | 2 |
| Codec List (BSS Supported) (serving cell) | 3.2.2.103 | BSS-MSC | O (note 7) | 3-n |
| Speech Codec (Chosen) | 3.2.2.104 | BSS-MSC | O (note 8) | 3-5 |

In Table 1, M is a required field, and O is an optional field. The column REFERENCE is the encoding format of this information unit and can refer to particular chapters of 3GPP protocol.

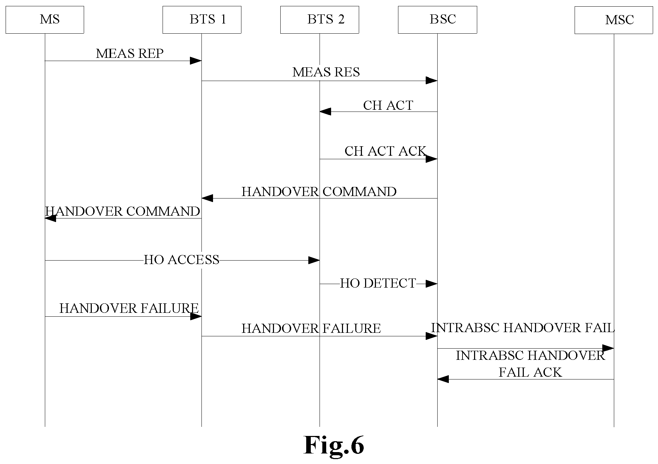

Fig. 6 is a flow chart of failed handover in a GSM system based method for cell handover according to the embodiments of the present invention, which includes the following steps.
1) The MS sends a measurement report message (MEAS REP) to the BTS1.
2) The BTS1 sends a measurement result message (MEAS RES) to the BSC.
3) The BSC sends a channel activation message (CH ACT) to a BST2.
4) The BTS2 sends a channel activation acknowledgement message (CH ACT ACK) to the BSC.
5) The BSC sends a handover command message (HANDOVER COMMAND) to the BTS1.
6) The BTS1 sends the handover command message (HANDOVER COMMAND) to the MS.
7) The MS sends a handover access message (HO ACCESS) to the BTS2.
8) The BTS2 sends a handover detection message (HO DETECT) to the BSC.
9) The MS sends a handover failure message (HANDOVER FAILURE) to the BTS1.
10) The BTS1 sends a handover failure message (HANDOVER FAILURE) to the BSC.
11) The BSC sends a BSC internal handover failure message (INTRABSC HANDOVER FAIL) to the MSC.
12) The MSC sends a BSC internal handover failure acknowledgement (INTRABSC HANDOVER FAIL ACK) message to the BSC.

As shown in Fig. 6, as to the situation that the intra-BSS handover fails, the particular processing procedure thereof includes the following steps.

Step S602: after having received a HANDOVER DETECT message sent from Abis port, the BSC system sends it to the CS control plane processing module to have it processed. The CS control plane determines whether the voice encoding modes before and after handover are the same. If not, then it constructs an INTRABSC HANDOVER DETECT message, wherein, as shown in Table 2, this INTRABSC HANDOVER DETECT message carries CHOSEN channel (channel type used after handover) and Speech Version (voice encoding mode used after handover)) and then the BSC sends this message to the MSC.

**Table 2**

| Information member | REFERENCE | PRESENCE | Format | Length |
|---|---|---|---|---|
| Message type | | M | V | 1 |
| Chosen Channel | 48008_3.2.2.33 | M | V | 1 |
| Speech Version (Chosen) | 48008_3.2.2.51 | M | V | 1 |

Step S604: after having received the INTRABSC HANDOVER DETECT message sent from port A, the MSC updates the current voice encoding mode to the voice encoding mode after handover. As described above, the MSC updating the current voice encoding mode to be the voice encoding mode after handover includes the two situations of: 1) if the voice encoding mode is used on the MSC, then the MSC updates the current voice encoding mode used locally to be the voice encoding mode after handover; and 2) if the voice encoding mode is used on the MGW, then the MSC sends a message to inform the MGW to update the current voice encoding mode to be the voice encoding mode after handover. After the updating, the MSC or MGW receives uplink voice data and sends downlink voice data according to the voice encoding mode after handover.

Step S606: when this intra-BSS handover fails and it returns to the original channel, the MS sends a HANDOVER FAILURE message to the BTS1. Then, the CS control plane of the BSC receives the HANDOVER FAILURE message sent from Abis port and sends an INTRABSC HANDOVER FAIL message to the MSC. As shown in Table 3, this INTRABSC HANDOVER FAIL message carries a channel type and the voice encoding mode before handover. After having received the INTRABSC HANDOVER FAIL, the MSC updates the current voice encoding mode to the voice encoding mode before handover. Here, the MSC updating the current voice encoding mode to be the voice encoding mode before handover includes the two situations of: 1) if the voice encoding mode is used on the MSC, then the MSC updates the current voice encoding mode used locally to be the voice encoding mode after handover; and 2) if the voice encoding mode is used on the MGW, then the MSC sends a message to inform the MGW to update the current voice encoding mode to be the voice encoding mode after handover. After the updating, the MSC or MGW receives uplink voice data and sends downlink voice data according to the voice encoding mode before handover.

After the voice encoding mode is updated successfully, the MSC sends an INTRABSC HANDOVER FAIL ACK message (without content) to the BSC, so that the BSC knows that the MSC or MGW has already updated the current voice encoding mode to be the voice encoding mode before handover according to the requirements of the BSC.

**Table 3**

| Information member | REFERENCE | PRESENCE | Format | Length |
|---|---|---|---|---|
| Message type | | M | V | 1 |
| Chosen Channel | 48008_3.2.2.33 | M | V | 1 |
| Speech Version (Chosen) | 48008_3.2.2.51 | M | V | 1 |

It can be known from the above that in the cell handover method according to the present invention, before receiving a HANDOVER COMPLETE message, the BSC sends a message to the MSC to inform the MSC of the voice encoding mode after handover and the chosen channel type so that the MSC updates the current voice encoding mode to be the voice encoding mode after handover in advance. Thus the voice interrupted time during handover is reduced and user experience is improved.

### Apparatus embodiments

A BSC is provided according to the embodiments of the present invention.

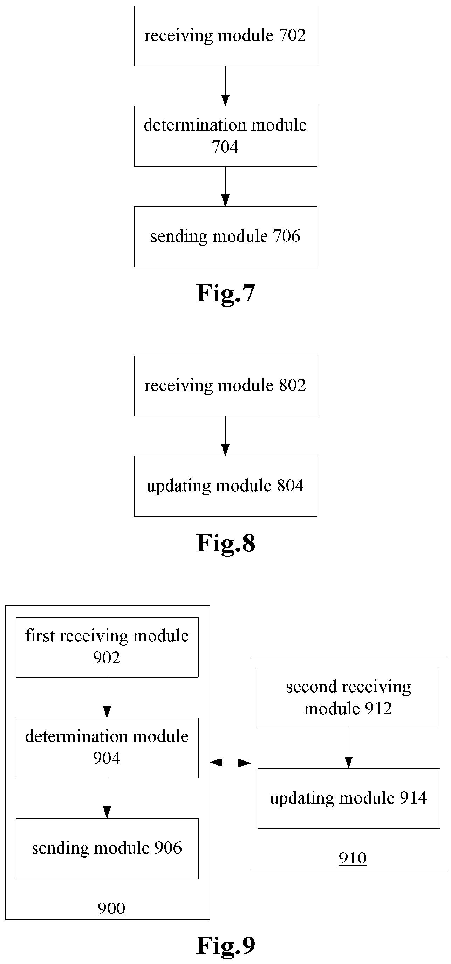

Fig. 7 is a structure diagram of a BSC according to the embodiments of the present invention. As shown in Fig. 7, this BSC can comprise: a receiving module **702** adapted to receive a handover detection message from a BTS and a HANDOVER COMPLETE message from an MS, and here the HANDOVER COMPLETE message can be initiated by the MS and forwarded to a BSC by the BTS; a determination module **704,** being connected to the receiving module **702,** adapted to determine whether a voice encoding mode before handover and a voice encoding mode after handover are the same after the handover detection message is received; and a sending module **706,** being connected to the determination module **704,** adapted to send a first message to the MSC after the receiving module **702** receives the handover detection message, and before the receiving module **702** receives the HANDOVER COMPLETE message, and in the situation that the determination module **704** determines that the voice encoding mode after handover is different from the voice encoding mode before handover, wherein the first message includes a channel type and the voice encoding mode after handover.

The receiving module **702** is also adapted to receive a handover failure message from the MS, wherein the handover failure message can be initiated by the MS and forwarded to the BSC by the BTS. The sending module **704** is also adapted to send a second message to the MSC after the receiving module receives the handover failure message, wherein the second message includes a channel type and the voice encoding mode before handover.

An MSC is also provided according to the embodiments of the present invention.

Fig. 8 is a structure diagram of an MSC according to the embodiments of the present invention. As shown in Fig. 8, this MSC can comprise: a receiving module **802** adapted to receive a first message from the BSC, wherein the first message includes a channel type and a voice encoding mode after handover; and an updating module **804,** being connected to the receiving module **802,** adapted to update a current voice encoding mode to be a voice encoding mode after handover, or send a message to inform a MGW to update the current voice encoding mode to be the voice encoding mode after handover after the receiving module **802** receives the first message.

The receiving module **802** is also adapted to receive a second message from the BSC, wherein the second message includes a channel type and a voice encoding mode before handover. Correspondingly, the updating module **804** is also adapted to update a current voice encoding mode to a voice encoding mode before handover after the receiving module **802** receives the second message, or send a message to inform an MGW to update the current voice encoding mode to be the voice encoding mode before handover after the receiving module **802** receives the second message.

It can be known from the above that according to the BSC and MSC described in the above embodiments, before receiving a HANDOVER COMPLETE message, the BSC sends a message to the MSC to inform the MSC of the voice encoding mode after handover and the chosen channel type so that the MSC updates the current voice encoding mode to be the voice encoding mode after handover. Thus the voice interrupted time during handover is reduced and user experience is improved.

A GSM system based system for cell handover is also provided according to the embodiments of the present invention.

Fig. 9 is a structure diagram of a GSM system based system for cell handover according to the present invention. As shown in Fig. 9, the system comprises a BSC **900** and an MSC **910,** wherein the BSC **900** includes: a first receiving module **902** adapted to receive a handover detection message from a BTS and a HANDOVER COMPLETE message from an MS; a determination module **904,** being connected to the first receiving module **902,** adapted to determine whether a voice encoding mode before handover and a voice encoding mode after handover are the same after the handover detection message is received; and a sending module **906,** being connected to the determination module **904,** adapted to send a first message to the MSC **910** before the receiving module receives the handover detection message, and after receives the HANDOVER COMPLETE message, and in the situation that the determination module **904** determines that the voice encoding mode after handover is different from the voice encoding mode before handover, wherein the first message includes a channel type and a voice encoding mode after handover.

The MSC **910** comprises: a second receiving module **912** adapted to receive the first message from the BSC **900;** and an updating module **914,** being connected to the second receiving module **912,** adapted to update the current voice encoding mode to be the voice encoding mode after handover after the second receiving module **912** receives the first message, or send a message to inform a MGW to update the current voice encoding mode to be the voice encoding mode after handover after the second receiving module **912** receives the first message.

It can be known from the above that in the cell handover system described in the above embodiments, before receiving a HANDOVER COMPLETE message, the BSC sends a message to the MSC to inform the MSC of the voice encoding mode after handover and the chosen channel type so that the MSC updates the current voice encoding mode to the voice encoding mode after handover. Thus the voice interrupted time during handover is reduced and user experience is improved.

It needs to be noted that the steps shown in the flow charts of the drawings can be executed in a computer system such as a set of computer executable instructions, and although the logical order is shown in the flow charts, the steps shown or described here can be executed in an order different from this in some circumstances.

Apparently, those skilled in the art should understand that the above-mentioned modules and steps of the present invention can be realized by using general purpose calculating device, can be integrated in one calculating device or distributed on a network which consists of a plurality of calculating devices. And alternatively, they can be realized by using the executable program code of the calculating device, so that consequently they can be stored in the storing device and executed by the calculating device, or they are made into integrated circuit module respectively, or a plurality of modules or steps thereof are made into one integrated circuit module. In this way, the present invention is not restricted to any particular hardware and software combination.

Above description is only to illustrate the preferred embodiments but not to limit the present invention. Various alterations and changes to the present invention are apparent to those skilled in the art. The scope defined in claims shall comprise any modification, equivalent substitution and improvement within the principle of the present invention.

## Claims

1. A Global System for Mobile Communication, GSM, system based method for cell handover, wherein after a base station controller, BSC, receives a handover detection message, the method further comprises:
the BSC determining whether a voice encoding mode after handover is the same as a voice encoding mode before the handover;
if it is determined to be no, the BSC sending a first message to a mobile switching center, MSC, so that the MSC updates a current voice encoding mode to be the voice encoding mode after handover, wherein the first message comprises a channel type and the voice encoding mode after handover; and
if the handover is successful, the BSC receiving a handover complete message from a mobile station, MS.

2. The method according to Claim 1, wherein the MSC updating a current voice encoding mode to be the voice encoding mode after handover comprises:
the MSC sending a message to inform a media gateway, MGW, to update the current voice encoding mode to be the voice encoding mode after handover.

3. The method according to Claim 1, wherein after the BSC receiving a handover complete message from an MS, the method further comprises:
the MSC receiving a second message from the BSC, wherein the second message carries information for indicating that the handover is completed; and
the MSC deleting information for indicating the voice encoding mode before handover.

4. The method according to Claim 3, wherein the MSC deleting information for indicating the voice encoding mode before handover comprises:
the MSC sending a message to inform a MGW to delete the information for indicating the voice encoding mode before handover.

5. The method according to Claim 1, wherein after the BSC sending a first message to the MSC, the method further comprises:
if the BSC receives a handover failure message sent from the MS, the BSC sending a third message to the MSC so that the MSC updates the current voice encoding mode to be the voice encoding mode before handover, wherein the third message comprises a channel type and the voice encoding mode before handover.

6. The method according to Claim 5, wherein the MSC updating the current voice encoding mode to be the voice encoding mode before handover comprises:
the MSC sending a message to inform a MGW to update the current voice encoding mode to be the voice encoding mode before handover.

7. The method according to any one of Claims 1 to 6, wherein after the MS switches to a new cell, a base transceiver station, BTS, sends the handover detection message to the BSC.

8. Abase station controller, BSC, comprising:
a receiving module (702) adapted to receive a handover detection message from a base transceiver station, BTS, and a handover complete message from a mobile station, MS;
a determination module (704) adapted to determine whether a voice encoding mode before handover and a voice encoding mode after handover are the same after having received the handover detection message; and
a sending module (706) adapted to send a first message to the MSC after the receiving module receives the handover detection message, and before the receiving module receives the handover complete message, and in the situation that the determination module determines that the voice encoding mode after handover is different from the voice encoding mode before handover, wherein the first message comprises a channel type and the voice encoding mode after handover.

9. The BSC according to Claim 8, wherein the BSC further comprises:
the receiving module (702) further adapted to receive a handover failure message from the MS; and
the sending module (704) further adapted to send a second message to the MSC after the receiving module receives the handover failure message, wherein the second message comprises a channel type and the voice encoding mode before handover.

10. A mobile switching center, MSC, comprising:
a receiving module (802) adapted to receive a first message from a BSC after the BSC receives a handover detection message from a BTS, and before the BSC receives a handover complete message from an MS, and in the situation that BSC determines that a voice encoding mode after handover is different from a voice encoding mode before handover, wherein the first message comprises a channel type and the voice encoding mode after handover; and
an updating module (804) adapted to update a current voice encoding mode to be a voice encoding mode after handover after the receiving module receives the first message, or send a message to inform a MGW to update the current voice encoding mode to be the voice encoding mode after handover after the receiving module receives the first message.

11. A GSM system based system for cell handover, wherein the system comprises a base station controller (900), BSC, and a mobile switching center (910), MSC, wherein
the BSC (900) comprises:
a first receiving module (902) adapted to receive a handover detection message from a BTS and a handover complete message from an MS;
a determination module (904) adapted to determine whether a voice encoding mode before handover and a voice encoding mode after handover are the same after the handover detection message is received; and
a sending module (906) adapted to send a first message to the MSC after the first receiving module receives the handover detection message, and before the first receiving module receives the handover complete message, and in the situation that the determination module determines that the voice encoding mode after handover is different from the voice encoding mode before handover; and
the MSC (910) comprises:
a second receiving module (912) adapted to receive the first message from the BSC; and
an updating module (914) adapted to update a current voice encoding mode to be the voice encoding mode after handover after the second receiving module receives the first message, or send a message to inform a MGW to update the current voice encoding mode to be the voice encoding mode after handover after the second receiving module receives the first message.

## Patentansprüche

1. Globales System für Mobilkommunikation-, GSM, systembasiertes Verfahren zur Zellenübergabe, wobei, nachdem eine Basisstationssteuerung, BSC, eine Übergabeerkennungsnachricht empfängt, das Verfahren weiter umfasst:
Bestimmen, durch die BSC, ob ein Sprachcodiermodus nach Übergabe der gleiche ist wie ein Sprachcodiermodus vor der Übergabe;
wenn bestimmt wird, dass dem nicht so ist, Senden, durch die BSC, einer ersten Nachricht an eine Mobilvermittlungsstelle, MSC, sodass die MSC einen aktuellen Sprachcodiermodus so aktualisiert, dass er der Sprachcodiermodus nach Übergabe ist, wobei die erste Nachricht einen Kanaltyp und den Sprachcodiermodus nach Übergabe umfasst; und
wenn die Übergabe erfolgreich ist, Empfangen, durch die BSC, einer Übergabeabschlussnachricht von einer Mobilstation, MS.

2. Verfahren nach Anspruch 1, wobei das Aktualisieren, durch die MSC, eines aktuellen Sprachcodiermodus so, dass er der Sprachcodiermodus nach Übergabe ist, umfasst:
Senden, durch die MSC, einer Nachricht, um ein Medien-Gateway, MGW, darüber zu informieren, den aktuellen Sprachcodiermodus so zu aktualisieren, dass er der Sprachcodiermodus nach Übergabe ist.

3. Verfahren nach Anspruch 1, wobei nach Empfangen, durch die BSC, einer Übergabeabschlussnachricht von einer MS das Verfahren weiter umfasst:
Empfangen, durch die MSC, einer zweiten Nachricht von der BSC, wobei die zweite Nachricht Informationen übermittelt zum Anzeigen, dass die Übergabe abgeschlossen ist; und
Löschen, durch die MSC, von Informationen zum Anzeigen des Sprachcodiermodus vor Übergabe.

4. Verfahren nach Anspruch 3, wobei das Löschen, durch die MSC, von Informationen zum Anzeigen des Sprachcodiermodus vor Übergabe umfasst:
Senden, durch die MSC, einer Nachricht, um ein MGW darüber zu informieren, die Informationen zum Anzeigen des Sprachcodiermodus vor Übergabe zu löschen.

5. Verfahren nach Anspruch 1, wobei nach Senden, durch die BSC, einer ersten Nachricht an die MSC das Verfahren weiter umfasst:
wenn die BSC eine von der MS gesendete Übergabefehlschlagsnachricht empfängt, Senden, durch die BSC, einer dritten Nachricht an die MSC, sodass die MSC den aktuellen Sprachcodiermodus so aktualisiert, dass er der Sprachcodiermodus vor Übergabe ist, wobei die dritte Nachricht einen Kanaltyp und den Sprachcodiermodus vor Übergabe umfasst.

6. Verfahren nach Anspruch 5, wobei das Aktualisieren, durch die MSC, des aktuellen Sprachcodiermodus so, dass er der Sprachcodiermodus vor Übergabe ist, umfasst:
Senden, durch die MSC, einer Nachricht, um ein MGW darüber zu informieren, den aktuellen Sprachcodiermodus so zu aktualisieren, dass er der Sprachcodiermodus vor Übergabe ist.

7. Verfahren nach einem der Ansprüche 1 bis 6, wobei nachdem die MS auf eine neue Zelle umschaltet, eine Basistransceiverstation, BTS, die Übergabeerkennungsnachricht an die BSC sendet.

8. Basisstationssteuerung, BSC, umfassend:
ein Empfangsmodul (702), das dazu ausgebildet ist, eine Übergabeerkennungsnachricht von einer Basistransceiverstation, BTS, und eine Übergabeabschlussnachricht von einer Mobilstation, MS, zu empfangen;
ein Bestimmungsmodul (704), das dazu ausgebildet ist, zu bestimmen, ob ein Sprachcodiermodus vor Übergabe und ein Sprachcodiermodus nach Übergabe die gleichen sind, nachdem es die Übergabeerkennungsnachricht empfangen hat; und
ein Sendemodul (706), das dazu ausgebildet ist, nachdem das Empfangsmodul die Übergabeerkennungsnachricht empfängt und bevor das Empfangsmodul die Übergabeabschlussnachricht empfängt, und in der Situation, dass das Bestimmungsmodul bestimmt, dass der Sprachcodiermodus nach Übergabe vom Sprachcodiermodus vor Übergabe verschieden ist, eine erste Nachricht an die MSC zu senden, wobei die erste Nachricht einen Kanaltyp und den Sprachcodiermodus nach Übergabe umfasst.

9. BSC nach Anspruch 8, wobei die BSC weiter umfasst:
das Empfangsmodul (702), das weiter dazu ausgebildet ist, eine Übergabefehlschlagsnachricht von der MS zu empfangen; und
das Sendemodul (704), das weiter dazu ausgebildet ist, eine zweite Nachricht an die MSC zu senden, nachdem das Empfangsmodul die Übergabefehlschlagsnachricht empfängt, wobei die zweite Nachricht einen Kanaltyp und den Sprachcodiermodus vor Übergabe umfasst.

10. Mobilvermittlungsstelle, MSC, umfassend:
ein Empfangsmodul (802), das dazu ausgebildet ist, nachdem die BSC eine Übergabeerkennungsnachricht von einer BTS empfängt und bevor die BSC eine Übergabeabschlussnachricht von einer MS empfängt, und in der Situation, dass BSC bestimmt, dass ein Sprachcodiermodus nach Übergabe von einem Sprachcodiermodus vor Übergabe verschieden ist, eine erste Nachricht von einer BSC zu empfangen, wobei die erste Nachricht einen Kanaltyp und den Sprachcodiermodus nach Übergabe umfasst; und
ein Aktualisierungsmodul (804), das dazu ausgebildet ist, nachdem das Empfangsmodul die erste Nachricht empfängt, einen aktuellen Sprachcodiermodus so zu aktualisieren, dass er ein Sprachcodiermodus nach Übergabe ist, oder nachdem das Empfangsmodul die erste Nachricht empfängt, eine Nachricht zu senden, um ein MGW darüber zu informieren, den aktuellen Sprachcodiermodus so zu aktualisieren, dass er der Sprachcodiermodus nach Übergabe ist.

11. GSM-systembasiertes System zur Zellenübergabe, wobei das System eine Basisstationssteuerung (900), BSC, und eine Mobilvermittlungsstelle (910), MSC, umfasst, wobei
die BSC (900) umfasst:
ein erstes Empfangsmodul (902), das dazu ausgebildet ist, eine Übergabeerkennungsnachricht von einer BTS und eine Übergabeabschlussnachricht von einer MS zu empfangen;
ein Bestimmungsmodul (904), das dazu ausgebildet ist, zu bestimmen, ob ein Sprachcodiermodus vor Übergabe und ein Sprachcodiermodus nach Übergabe die gleichen sind, nachdem die Übergabeerkennungsnachricht empfangen wurde; und
ein Sendemodul (906), das dazu ausgebildet ist, nachdem das erste Empfangsmodul die Übergabeerkennungsnachricht empfängt und bevor das erste Empfangsmodul die Übergabeabschlussnachricht empfängt, und in der Situation, dass das Bestimmungsmodul bestimmt, dass der Sprachcodiermodus nach Übergabe vom Sprachcodiermodus vor Übergabe verschieden ist, eine erste Nachricht an die MSC zu senden; und
die MSC (910) umfasst:
ein zweites Empfangsmodul (912), das dazu ausgebildet ist, die erste Nachricht von der BSC zu empfangen; und
ein Aktualisierungsmodul (914), das dazu ausgebildet ist, nachdem das zweite Empfangsmodul die erste Nachricht empfängt, einen aktuellen Sprachcodiermodus so zu aktualisieren, dass er der Sprachcodiermodus nach Übergabe ist, oder nachdem das zweite Empfangsmodul die erste Nachricht empfängt, eine Nachricht zu senden, um ein MGW darüber zu informieren, den aktuellen Sprachcodiermodus so zu aktualisieren, dass er der Sprachcodiermodus nach Übergabe ist.

## Revendications

1. Procédé basé sur un système de système mondial de communication mobile, GSM, pour un transfert intercellulaire, dans lequel après qu'un contrôleur de station de base, BSC, reçoit un message de détection de transfert, le procédé comprend en outre :
le fait de déterminer par le BSC si un mode de codage vocal après transfert est le même qu'un mode de codage vocal avant le transfert ;
s'il est déterminé que le résultat est non, l'envoi par le BSC d'un premier message à un centre de commutation mobile, MSC, de manière que le MSC mette à jour un mode de codage vocal actuel pour être le mode de codage vocal après transfert, dans lequel le premier message comprend un type de canal et le mode de codage vocal après transfert ; et
si le transfert est réussi, la réception par le BSC d'un message d'achèvement de transfert à partir d'une station mobile, MS.

2. Procédé selon la revendication 1, dans lequel la mise à jour par le MSC d'un mode de codage vocal actuel pour être le mode de codage vocal après transfert comprend :
l'envoi par le MSC d'un message pour informer une passerelle multimédia, MGW, pour mettre à jour le mode de codage vocal actuel pour être le mode de codage vocal après transfert.

3. Procédé selon la revendication 1, dans lequel après la réception par le BSC d'un message d'achèvement de transfert à partir d'une MS, le procédé comprend en outre :
la réception par le MSC d'un deuxième message à partir du BSC, dans lequel le deuxième message porte des informations pour indiquer que le transfert est achevé ; et
la suppression par le MSC d'informations indiquant le mode de codage vocal avant transfert.

4. Procédé selon la revendication 3, dans lequel la suppression par le MSC d'informations indiquant le mode de codage vocal avant transfert comprend :
l'envoi par le MSC d'un message pour informer une MGW pour supprimer les informations pour indiquer le mode de codage vocal avant transfert.

5. Procédé selon la revendication 1, dans lequel après l'envoi par le BSC d'un premier message au MSC, le procédé comprend en outre :
si le BSC reçoit un message d'échec de transfert envoyé à partir de la MS, l'envoi par le BSC d'un troisième message au MSC de manière que le MSC mette à jour le mode de codage vocal actuel pour être le mode de codage vocal avant transfert, dans lequel le troisième message comprend un type de canal et le mode de codage vocal avant transfert.

6. Procédé selon la revendication 5, dans lequel la mise à jour par le MSC du mode de codage vocal actuel pour être le mode de codage vocal avant transfert comprend :
l'envoi par le MSC d'un message pour informer une MGW pour mettre à jour le mode de codage vocal actuel pour être le mode de codage vocal avant transfert.

7. Procédé selon l'une quelconque des revendications 1 à 6, dans lequel après que la MS commute sur une nouvelle cellule, une station d'émetteur-récepteur de base, BTS, envoie le message de détection de transfert au BSC.

8. Contrôleur de station de base, BSC, comprenant :
un module de réception (702) adapté pour recevoir un message de détection de transfert à partir d'une station d'émetteur-récepteur de base, BTS, et un message d'achèvement de transfert à partir d'une station mobile, MS ;
un module de détermination (704) adapté pour déterminer si un mode de codage vocal avant transfert et un mode de codage vocal après transfert sont les mêmes après avoir reçu le message de détection de transfert ; et
un module d'envoi (706) adapté pour envoyer un premier message au MSC après que le module de réception reçoit le message de détection de transfert et avant que le module de réception reçoive le message d'achèvement de transfert et, dans la situation où le module de détermination détermine que le mode de codage vocal après transfert est différent du mode de codage vocal avant transfert, dans lequel le premier message comprend un type de canal et le mode de codage vocal après transfert.

9. BSC selon la revendication 8, dans lequel le BSC comprend en outre :
le module de réception (702) adapté en outre pour recevoir un message d'échec de transfert à partir de la MS ; et
le module d'envoi (704) adapté en outre pour envoyer un deuxième message au MSC après que le module de réception reçoit le message d'échec de transfert, dans lequel le deuxième message comprend un type de canal et le mode de codage vocal avant transfert.

10. Centre de commutation mobile, MSC, comprenant :
un module de réception (802) adapté pour recevoir un premier message à partir d'un BSC après que le BSC reçoit un message de détection de transfert à partir d'une BTS et avant que le BSC reçoive un message d'achèvement de transfert à partir d'une MS, et, dans la situation où le BSC détermine qu'un mode de codage vocal après transfert est différent d'un mode de codage vocal avant transfert, dans lequel le premier message comprend un type de canal et le mode de codage vocal après transfert ; et
un module de mise à jour (804) adapté pour mettre à jour un mode de codage vocal actuel pour être un mode de codage vocal après transfert après que le module de réception reçoit le premier message, ou envoyer un message pour informer une MGW pour mettre à jour le mode de codage vocal actuel pour être le mode de codage vocal après transfert après que le module de réception reçoit le premier message.

11. Système basé sur un système GSM pour un transfert intercellulaire, dans lequel le système comprend un contrôleur de station de base, BSC, (900) et un centre de commutation mobile, MSC, (910), dans lequel
le BSC (900) comprend :
un premier module de réception (902) adapté pour recevoir un message de détection de transfert à partir d'une BTS et un message d'achèvement de transfert à partir d'une MS ;
un module de détermination (904) adapté pour déterminer si un mode de codage vocal avant transfert et un mode de codage vocal après transfert sont les mêmes après que le message de détection de transfert est reçu ; et
un module d'envoi (906) adapté pour envoyer un premier message au MSC après que le premier module de réception reçoit le message de détection de transfert et avant que le premier module de réception reçoive le message d'achèvement de transfert et, dans la situation où le module de détermination détermine que le mode de codage vocal après transfert est différent du mode de codage vocal avant transfert ; et
le MSC (910) comprend :
un deuxième module de réception (912) adapté pour recevoir le premier message à partir du BSC ; et
un module de mise à jour (914) adapté pour mettre à jour un mode de codage vocal actuel pour être le mode de codage vocal après transfert après que le deuxième module de réception reçoit le premier message, ou envoyer un message pour informer une MGW pour mettre à jour le mode de codage vocal actuel pour être le mode de codage vocal après transfert après que le deuxième module de réception reçoit le premier message.
